## Europäisches Patentamt

## European Patent Office

## Office européen des brevets

(19)

(11) Numéro de publication: **0 057 627**
**B1**

(12)

# FASCICULE DE BREVET EUROPEEN

(45) Date de publication du fascicule du brevet:
**06.02.85**

(51) Int. Cl.⁴: **B 22 D 2/00,** B 22 D 11/16,
G 01 F 23/24

(21) Numéro de dépôt: **82400100.2**

(22) Date de dépôt: **20.01.82**

(54) **Détecteur thermosensible du niveau de matière dans une lingotière de coulée continue.**

(30) Priorité: **02.02.81 FR 8102082**

(43) Date de publication de la demande:
**11.08.82 Bulletin 82/32**

(45) Mention de la délivrance du brevet:
**06.02.85 Bulletin 85/6**

(84) Etats contractants désignés:
**AT DE GB IT**

(56) Documents cités:
**DE - A - 2 652 433**
**FR - A - 2 114 601**
**FR - A - 2 171 045**
**FR - A - 2 292 539**
**FR - A - 2 348 477**
**FR - A - 2 361 180**
**FR - A - 2 369 548**
**US - A - 4 135 186**

**Fujikawa et al. "Technical Review" Juin 1977, pages 418 à 425**

(73) Titulaire: **INSTITUT DE RECHERCHES DE LA SIDERURGIE FRANCAISE (IRSID) France, 185, rue Président Roosevelt, F-78105 Saint-Germain-en-Laye (FR)**

(72) Inventeur: **Ruer, Jacques, 21, rue du Saut au Loup, F-78290 Croissy/Seine (FR)**

(74) Mandataire: **Ventavoli, Roger, INSTITUT DE RECHERCHES DE LA SIDERURGIE FRANCAISE (IRSID) 185, rue Président Roosevelt, F-78105 Saint-Germain-en-Laye (FR)**

## Description

La présente invention se rapporte à la détection du niveau de matière contenue dans un récipient par des moyens thermosensibles, tels que thermocouples, thermistances, etc... En particulier, l'invention concerne la détection de niveau du métal en fusion dans les lingotières de coulée continue, notamment celles équipées d'un inducteur de brassage.

On sait que la présence d'un détecteur de niveau dans une lingotière de coulée continue devient un impératif qui se substitue à l'observation visuelle dès que l'on souhaite contrôler efficacement l'opération de coulée, notamment au moyen d'une régulation automatique.

On connaît actuellement plusieurs types de détecteurs appliqués industriellement à la coulée continue des métaux. On citera à cet égard les systèmes de mesure à visée optique dans l'infrarouge (brevets français n° 2 292 539, 2 361 180, 2 369 548), les systèmes à rayonnement $\gamma$ (brevet français n° 2 348 477), ou les systèmes à capteurs électromagnétiques (Fujikawa et al. Technical Review - Juin 77, pages 418 à 425), ou encore les systèmes thermosensibles mettant en oeuvre soit des thermocouples dont les têtes de mesure (soudures chaudes) sont réparties verticalement au contact de la face extérieure de la paroi en cuivre de la lingotière (brevet américain n° 3 204 460) ou incorporées à ladite paroi, soit des sondes monofilaires réalisant l'effet «thermocouple» par contact avec la paroi en cuivre qui joue le rôle de retour commun (brevet français n° 2 114 601 et son certificat d'addition n° 2 171 045).

Ces différents types de détecteurs ne sont pas parfaitement adaptés à toutes les installations de coulée continue. En particulier, ils s'appliquent plus ou moins bien aux machines de coulée dont les lingotières sont équipées d'un inducteur électromagnétique pour le brassage du métal en fusion.

En effet, le détecteur à rayons $\gamma$ occupe partiellement la place qui devrait être réservée à l'inducteur et les systèmes à capteurs électromagnétiques ou à sondes monofilaires peuvent être gênés par le champ magnétique créé par l'inducteur. Les systèmes à visée optique, étant eux extérieurs à la lingotière, sont donc indépendants de la présence d'un inducteur, mais en contre-partie, ils sont d'un emploi irrégulier, soumis aux aléas de la vie quotidienne de l'aciérie. Quant aux systèmes à éléments thermosensibles — à thermocouples en particulier — dont fait partie la présente invention, ils ont pour eux l'avantage d'être simples et peu coûteux. Par ailleurs, moyennant quelques précautions élémentaires, ils s'accommodent fort bien de la présence d'un inducteur électromagnétique dans leur voisinage immédiat. Toutefois, il s'agit d'objets relativement délicats devant être manipulés avec soin. De plus, dans leur conception actuelle, ils impliquent une intervention spéciale, lors du remplacement de l'élément interne en cuivre de la lingotière, pour la coulée de formats différents par exemple.

La présente invention a pour but de rendre de tels systèmes d'application universelle à toutes les machines de coulée, tant celles équipées d'un inducteur électromagnétique au niveau, ou au sein, de la lingotière, que celles nécessitant des remplacements fréquents de l'élément interne en cuivre et ceci sans pour autant impliquer une intervention spéciale due à la présence du système de détection.

Un autre but est de pouvoir disposer d'un système très souple, qui soit d'un montage facile et rapide aussi bien de fabrication pour les lingotières nouvelles que pour les lingotières existantes.

A cet effet, l'invention a pour objet un détecteur thermosensible du niveau de matière contenue dans une lingotière de coulée continue de métaux en fusion comportant une circulation d'un fluide de refroidissement dans un espace ménagé entre un élément tubulaire interne définissant le passage pour le métal coulé et une chemise entourant à distance ledit élément, ledit détecteur comprenant une pluralité de capteurs thermosensibles dont les têtes de mesure sont réparties sur la hauteur du récipient. Les capteurs thermosensibles sont montés dans une pièce-support présentant au moins un élément de surface à laquelle affleurent les têtes de mesure. Le détecteur est fixé sur la paroi extérieure de la chemise de la lingotière, cette chemise étant ajourée pour le passage de la pièce-support incorporant les capteurs de température. Des moyens sont prévus pour agir sur la pièce-support de façon à assurer un appui élastique dudit élément de surface sur la paroi extérieure du récipient, et cet élément de surface est conformé de façon à épouser la paroi extérieure du récipient à l'endroit où il est destiné à prendre appui.

Conformément à une variante, la pièce-support est constituée essentiellement par une plaquette monobloc présentant des perçages qui débouchent sur une petite face destinée à prendre un appui élastique sur la paroi du récipient et dans lesquels sont placés les capteurs thermosensibles, la plaquette étant montée élastiquement sur un châssis-porteur fixe par rapport au récipient.

Conformément à une autre variante, la pièce-support est constituée par un jeu de cames longitudinales disposées parallèlement les unes à côté des autres et dans chacune desquelles est placé un élément thermosensible. Les cames se présentent sous la forme de doigts comportant une extrémité inférieure libre, en surface de laquelle affleure la tête de mesure du capteur thermosensible, l'autre extrémité étant articulée sur un axe fixe par rapport au récipient et des moyens sont prévus pour assurer à chaque doigt un appui élastique de son extrémité libre sur la paroi extérieure du récipient.

Comme on le comprend, la présente invention consiste donc, pour l'essentiel, à incoporer les capteurs thermosensibles dans une pièce mécanique capable de s'appuyer élastiquement contre la paroi du récipient dont il s'agit de déterminer le niveau de remplissage. Le contact mécanique s'effectue par au moins un élément de surface prévu sur la pièce, et présentant, à cet effet, d'une part une configuration géométrique lui permettant d'épouser la paroi du récipient à l'endroit du contact et, d'autre part, des orifices répartis selon la hauteur, et où affleurent les têtes de mesure des capteurs thermosensibles.

Ainsi, le détecteur selon l'invention se présente en un tout matériel et fonctionnel pouvant être facilement et rapidement mis en place sur le récipient. Par ailleurs, la pièce mécanique incorporant les éléments thermosensibles constitue pour ceux-ci une masse protectrice qui supprime tout risque de détérioration. Les précautions de manipulation du dispositif se trouvent donc réduites au strict minimum.

De plus, le détecteur est destiné à être mis au contact du récipient en exerçant simplement sur ce dernier une pression élastique. Il n'y a donc pas de liaison mécanique entre eux au sens habituel du terme, de sorte que leur assemblage est totalement libre. Cette particularité représente un avantage majeur pour une lingotière de coulée continue. En effet, on peut alors retirer l'élément interne en cuivre sans se préoccuper de la présence du détecteur. De même, lors de l'introduction de l'élément interne dans le corps de lingotière, le détecteur s'escamote automatiquement pour laisser le passage tout en prenant appui sur l'élément mis en place afin d'assurer le contact nécessaire à la mesure.

Il est donc possible, grâce au détecteur selon l'invention, de remplacer l'élément en cuivre d'une lingotière de coulée continue, sans rencontrer plus de difficultés que dans le cas d'une lingotière dépourvue de détecteur.

De plus, il ne perturbe nullement le système de refroidissement primaire du produit coulé au sein de la lingotière.

On peut donc dire de façon générale que le détecteur selon l'invention a un comportement totalement neutre, tant en ce que concerne le fonctionnement normal des lingotières que leur pratique habituelle d'utilisation.

Par ailleurs, le détecteur fonctionne avec des capteurs de température de nature diverse: thermocouple, thermistances, bolomètres, etc . . . Il peut s'installer facilement et rapidement sur une lingotière de coulée continue équipée intérieurement d'un inducteur de brassage, et fonctionne sans être gêne par le champ magnétique. Son faible encombrement ne compromet en rien la mise en place de l'inducteur dans les conditions de brassage les meilleurs du métal en fusion. Sa liaison électrique avec l'extérieur de la lingotière peut se faire avantageusement sur la même plaque à bornes que l'inducteur.

L'invention sera bien comprise et d'autres aspects et avantages ressortiront plus clairement au vu de la description qui suit, donnée à titre d'exemple non limitatif et en référence aux planches de dessins annexées sur lesquelles:

la figure 1 est une vue de face d'un détecteur de niveau à plaquette d'appui,

la figure 2 est une vue en coupe verticale de profil selon le plan AA de la figure 1, le détecteur étant monté dans une lingotière de coulée continue équipée intérieurement d'un inducteur de brassage,

la figure 3 est une vue en coupe horizontale selon le plan BB de la figure 1,

la figure 4 est une vue da face d'un détecteur de niveau à jeu de cames d'appui,

la figure 5 est une vue en coupe de profil du détecteur selon la figure 4 monté dans une lingotière de coulée continue.

Sur toutes les figures, les mêmes éléments sont indiqués par des références identiques.

Comme on le voit sur les trois premières figures, le détecteur de niveau 1 comprend une pièce centrale 2 montée sur un cadre porteur 3 faisant chassis. La pièce 2 est un profilé métallique (acier inox) en T constitué principalement par une plaquette 4 formant l'âme du T et bordée d'un côté par deux ailes à angle droit 5 et 5' qui se rejoignent à leurs extrémités. La plaquette est engagée par son côté libre dans une ouverture longitudinale 6 menagée à cet effet au milieu du chassis 3.

La pièce 2 est solidarisée au chassis par des moyens de fixation élastique constitués ici par deux simples ressorts à lame ondulée 7 et 7'. Les ressorts sont fixés à mi-longueur sur le chassis par des vis 8 et 8' et leurs extrémités libres présentent des portées latérales 9, 9', qui s'appuient respectivement sur les ailes 5 et 5' de la pièce 2, laquelle se trouve donc serrée élastiquement contre le chassis, lorsque le détecteur n'est pas monté sur un récipient de mesure.

On observe que la plaquette 4 comporte sur chant des perçages 10 étagés sur la hauteur et dans lesquels sont logés des thermocouples 11. Ces perçages débouchent sur la face étroite 12 de la plaquette qui présente une surface bien plane destinée à être mise au contact de la paroi extérieure du récipient de mesure. Les raisons qui justifient cette planéité seront explicitées par la suite.

La pièce 2 constitue ainsi une pièce-support pour une série de thermocouples dont les têtes de mesure 13, réparties verticalement, viennent affleurer en surface 12.

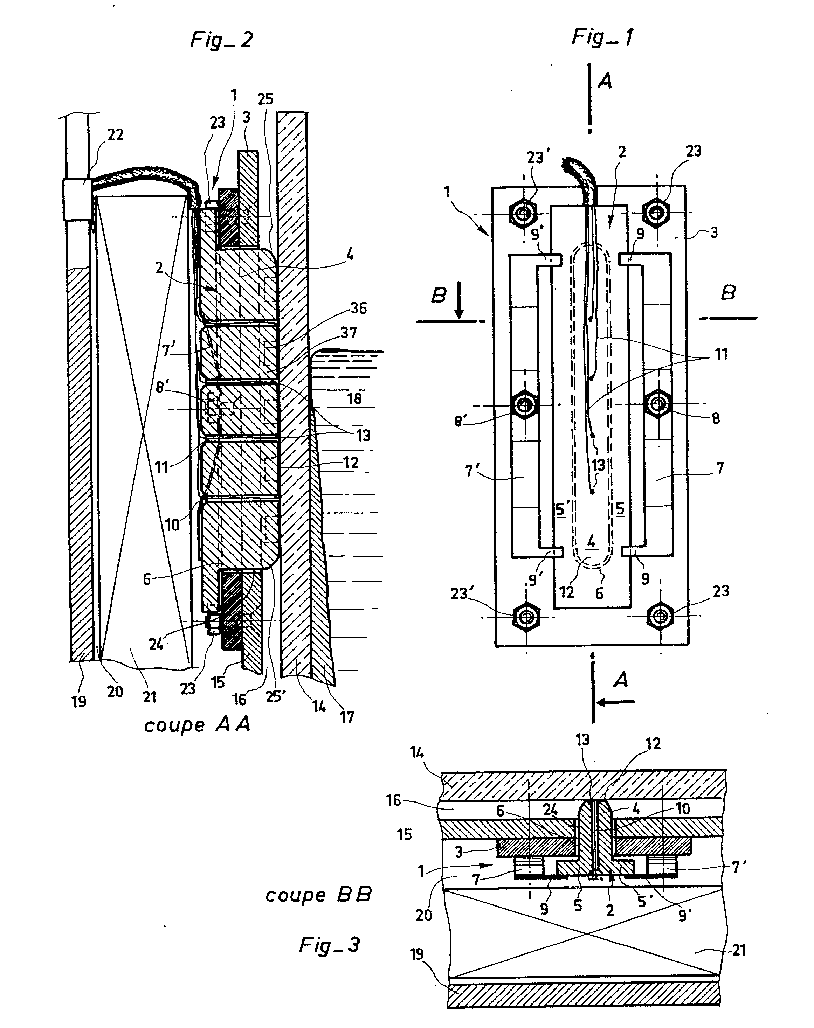

Comme on le voit plus clairement sur les figures 2 et 3, le détecteur 1 est appliqué par sa petite face 12 contre la paroi extérieure d'un récipient 14 qui, dans le cas présent, est le tube en cuivre (ou alliage de cuivre) d'une lingotière pour la coulée continue de billettes d'acier.

On rappelle que cette lingotière, partiellement et schématiquement représentée sur la figure 2, comprend de façon habituelle une chemise métallique 15 qui entoure à distance l'élément tubulaire 14 en définissant entre eux un espace 16.

Cet espace est réservé à une circulation vigoureuse d'eau de refrodissement qui, par échange thermique au travers du tube 14, assure la solidification d'une couche annulaire 17 de métal coulé 18 suffisante pour permettre l'extraction de ce dernier hors de la lingotière. D'autre part, la chemise 15 est elle-même entourée à distance par une enveloppe périphérique 19 en acier qui définit le gabarit de la lingotière. La chemise 15 et l'enveloppe extérieure 19 ménagent entre elles un second espace concentrique à l'espace 16, mais beaucoup plus large et partagé par un organe de séparation étanche en deux chambres superposées respectivement supérieure et inférieure.

L'une de ces chambres sert à l'introduction de l'eau de refroidissement, l'autre à l'évacuation, leurs rôles étant réversibles en fonction du sens de circulation choisi dans l'espace 16. A cet effet, chaque chambre communique avec cet espace à l'une de ses extrémités. Pour ne pas surcharger inutilement les figures, seule la chambre supérieure 20 à été partiellement représentée.

Par ailleurs, dans l'exemple considéré, la chambre à eau supérieure 20 contient un inducteur électromagnétique 21, pour le brassage du métal liquide 18 coulé en lingotière. L'inducteur est relié à une alimentation électrique polyphasée extérieure non représentée par l'intermédiaire d'une boîte à borne 22 étanche montée sur l'enveloppe 19.

Le détecteur de niveau 1 selon l'invention est fixé sur la face extérieure de la chemise 15 à l'aide de vis 23 prévues dans les angles du chassis 3. La chemise 15 présente, dans l'alignement de l'ouverture 6 du chassis, sa propre ouverture 24 pour permettre le passage de la plaquette de mesure 4.

Pour assurer un appui élastique de la petite face 12 de la plaquette contre le tube 14, le détecteur est préalablement dimensionné de manière que la plaquette dépasse vers l'intérieur de la chemise d'une cote 2 à 3 mm plus grande que l'épaisseur de la lame d'eau 16.

Par ailleurs, la plaquette présente à son extrémité supérieure un chanfrein 25 de sorte que, au moment de l'introduction du tube 14, le détecteur s'écarte et se met automatiquement en position. Le tube 14 ne nécessite aucune modification due à la présence du détecteur. Il faut simplement prévoir des pions de guidage sur la chemise 15, ce qui est d'ailleurs habituellement le cas dans les lingotières de coulée continue de billettes.

De préférence, la plaquette 4 est chanfreinée à ses deux extrémités (25, 25'), de manière à avoir une réversibilité de montage.

Conformement à une caractéristique importante de l'invention, le détecteur 1 étant destiné à être appliqué à une lingotière de coulée continue ou, de façon générale, à tout récipient refroidi extérieurement par circulation d'un fluide refroidisssant, doit donc présenter une face d'appui, telle que la face 12, qui épouse étroitement la paroi du récipient au moins à l'endroit du contact des têtes de mesure 13, afin que la température mesurée ne soit pas faussée par des infiltrations d'eau intempestives contre les têtes de mesure.

Dans l'exemple considéré, la paroi extérieure du tube 14 étant plane, la face de mesure 12 l'est donc également. Dans ces conditions, la température repérée est alors supérieure à la température normale de la paroi du tube 14. Elle est d'ailleurs d'autant plus élevée que la largeur de la face d'appui 12 est grande. A titre indicatif, dans le cas d'une lingotière de coulée continue habituelle pour la production de billettes ou de blooms d'acier, le point de mesure accuse de l'ordre de 70°C de plus que la température moyenne de la face extérieure du tube 14 lorsque la largeur de la face de mesure 12 est environ égale à la moitié de l'épaisseur du tube 14.

Toutefois, il doit être souligné qu'en règle générale, la surface d'appui du détecteur doit être dimensionnée et surfacée en tenant compte des impératifs liés au refroidissement du récipient par une circulation de fluide sur sa paroi extérieure.

A cet égard, le détecteur à plaquette d'appui, tel que décrit précédemment, se trouve parfaitement adapté à son application à une lingotière de coulée continue dont on sait que la circulation de l'eau de refroidissement contre la paroi en cuivre s'effectue verticalement. Dans ces conditions en effet, la plaquette étant elle même orientée verticalement, sa présence dans l'espace 16 ne pénalise pas l'efficacité du refroidissement.

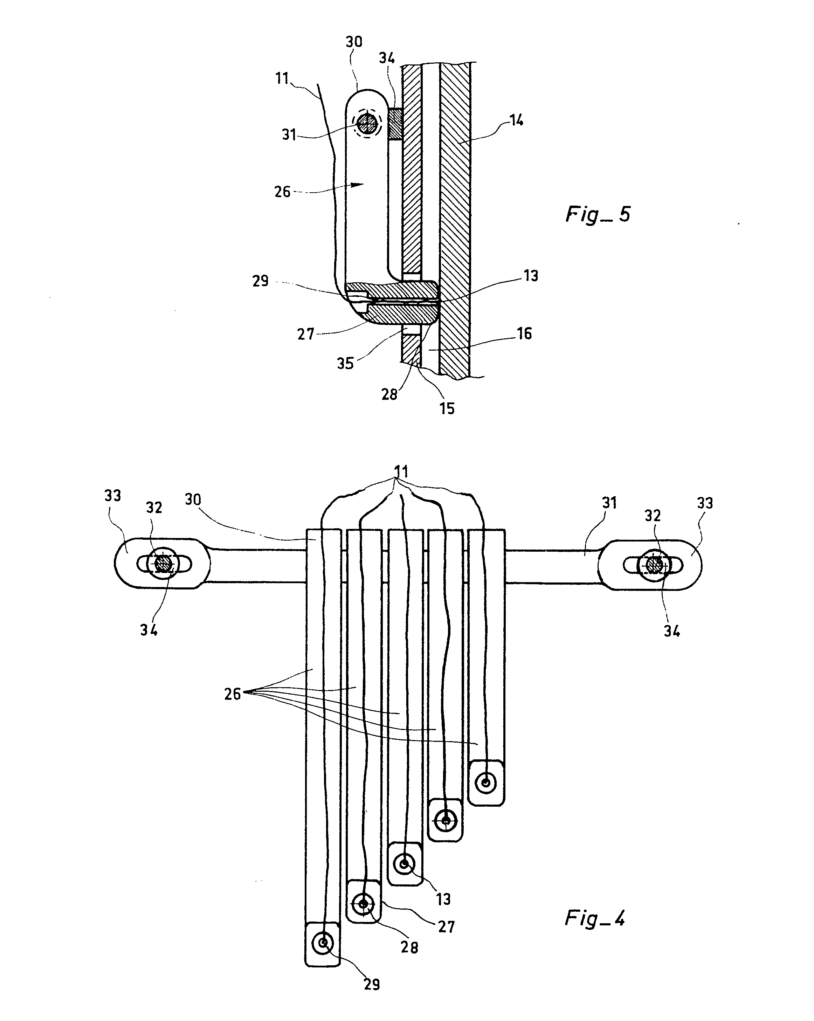

Il en est de même d'ailleurs pour le détecteur illustré sur les figures 4 et 5. Dans cette variante de réalisation, la plaquette d'appui monobloc précédemment décrite a été remplacée par un jeu de cames 26 longitudinales disposées parallèlement les unes à côté des autres et porteuses individuellement d'un thermocouple 11. Chaque came constitue un doigt présentant une extrémité libre recourbée 27 dont la face frontale 28 constitue un élément de surface plane destiné, comme le montre la figure 5, à être mis au contact de la paroi en cuivre 14 de la lingotière, et, au centre duquel affleure la tête de mesure 13 des thermocouples placés dans des perçages 29. L'autre extrémité 30 est articulée sur un axe porteur fixe 31 avec lequel les cames 26 formant un couple de torsion assurant l'appui élastique de la face frontale 28 contre la paroi du tube 14.

Ce couple de torsion peut être obtenu par tout moyen approprié et bien connu, tel que ressort en spirale, articulation élastique par interposition d'un joint élastomère, etc . . . ou plus simplement, comme dans l'exemple illustré ici, par simple déformation élastique de la matière constitutive des cames 26 qui est avantageusement de l'acier inoxydable.

Par ailleurs, les extrémités libres 27 sont, bien entendu, disposées de façon étagée de manière à pouvoir obtenir une succession de têtes de mesure réparties en différents niveaux sur la hauteur du récipient.

A cet effet, le détecteur à cames selon l'invention peut être conçu selon de nombreuses variantes de réalisation. En particulier, et comme le montrent les figures 4 et 5, les cames 26 peuvent présenter entre elles des longueurs différentes et être maintenues par un axe rectiligne commun 31 à leurs extrémités supérieures 30. Selon une autre variante, les cames peuvent être de longueur identique, auquel cas les extrémités supérieures 32 sont montées sur un axe à paliers échelonnés.

Le détecteur est fixé à faible distance sur la chemise de refroidissement 15 à l'aide de tirants 32 placés dans les oeillets 33 prévus aux extrémités de l'axe 31. Ces tirants sont munis de canons 34 servant d'entretoises. La présence de ces canons, ou de tout autre moyen équivalent, permet l'articulation des cames sans être gêné par la chemise de refroidissement 15. Par ailleurs, cette dernière présente des ouvertures 35 convenablement disposées pour permettre le passage des extrémités inférieures coudées 27. Comme dans le cas de la variante à plaquette monobloc décrite précédemment, les éléments de surface d'appui 28 sont avantageusement chanfreinés sur leur bord supérieur, de façon que les cames s'escamotent automatiquement au moment de l'introduction de l'élément tubulaire 14 de la lingotière.

Ainsi qu'on l'aura compris, le détecteur à cames a pour particularité que chaque capteur thermosensible 11 est associé à une pièce porteuse 26 autonome et mécaniquement indépendante des autres. Ceci peut constituer un avantage par rapport au détecteur à plaquette monobloc vu précédemment, car le contact de tout élément de surface 28 avec la paroi 14 est toujours parfaitement assuré, malgré les déformations éventuelles de cette dernière, qui peuvent être dues à des phénomènes de dilatation différentielle, non compensés, comme c'est le cas dans certaines constructions de lingotière pour lesquelles, par exemple, le tube en cuivre 14 se trouve bridé à ses deux extrémités.

D'autre part, le détecteur à cames est utilisable quel que soit le mode de refroidissement du récipient destiné à le recevoir car, dans ce cas, le fluide refroidissant peut circuler librement dans n'importe quelle direction dans l'espace 16. Cette possibilité peut toutefois être également obtenue avec un détecteur à plaquette monobloc. Il suffit en effet, conformément à une variante de l'invention, de prévoir sur la face d'appui 12 de la plaquette des dégagements permettant une circulation de l'eau perpendiculairement au plan de celle-ci. Ces dégagements, qui ont été représentés en traits discontinus sur la figure 2 sous la référence 36, déterminent entre eux des tétons 37 qui viennent en appui sur le tube 14.

Il va de soi que l'invention ne saurait se limiter aux exemples décrits, mais s'étend à de multiples variantes ou équivalents dans la mesure où sont respectées les caractéristiques énoncées dans les revendications jointes.

Ainsi, la présence d'entretoises d'écartement pour le détecteur à cames n'est utile que si le mouvement de bascule des cames s'accompagne d'une rotation de leur extrémité supérieure autour de l'axe porteur.

Par contre, si d'autres systèmes d'articulation à rappel automatique sont mis en oeuvre en maintenant cette extrémité fixée en rotation — par exemple des manchons en élastomère prolongeant les cames et fixés sur l'axe — les entretoises peuvent alors être supprimées.

Par ailleurs, l'appui élastique des cames contre le récipient peut être obtenu autrement que par des moyens agissant au niveau de l'articulation sur l'axe porteur, par exemple par des poussoirs mécaniques montés sur ressort et appuyant sur les cames.

De même, la présence d'une chemise autour du récipient de mesure n'est pas obligatoire pour le montage du détecteur. Ce dernier peut en effet être fixé directement sur le récipient à l'aide, par exemple, de bossages taraudés prévus à cet effet sur la surface extérieure du récipient.

**Revendications**

1. Détecteur thermosensible (1) du niveau de matière contenue dans une lingotière de coulée continue de métaux en fusion comportant une circulation d'un fluide de refroidissement dans un espace (16) ménagé entre un élément tubulaire interne (14) définissant le passage pour le métal coulé (18) et une chemise (15) entourant à distance ledit élément, ledit détecteur (1) présentant une pluralité de capteurs de température dont les têtes sensibles (13) sont réparties selon la hauteur de l'élément (14) et caractérisé en ce qu'il comprend une pièce-support (2) dans laquelle sont montés les capteurs de température (11) et présentant au moins un élément de surface (12) à laquelle affleurent les têtes sensibles (13) des capteurs (11), en ce que la chemise (15) est ajourée pour le passage de la pièce-support (2), en ce que des moyens (7), (7'), (8), (8'), (9), (9') de fixation du détecteur sur la paroi extérieure de la chemise (16) sont prévus pour assurer à la pièce-support un appui élastique par ledit élément de surface (12), sur la paroi extérieure de l'élément (14) et en ce que l'élément de surface (12) est géométriquement conformé de manière à épouser la paroi extérieure de l'élément (14) à l'endroit de l'appui.

2. Détecteur selon la revendication 1, caractérisé en ce que la pièce-support (2) est constituée essentiellement par une plaquette (4) présentant des perçages (10) qui débouchent sur une petite face (12) destinée à prendre un appui élastique sur la paroi extérieure de l'élément (14) et dans lesquels sont placés les capteurs de température (11).

3. Détecteur selon la revendication 2, caractérisé en ce que la plaquette support (4) présente un chanfrein (25), (25') au moins à l'extrémité supérieure de la petite face d'appui (12).

4. Détecteur selon les revendications 2 ou 3, caractérisé en ce que la petite face d'appui (12) présente des encoches (10) espacées définissant entre elles des tétons à l'extrémité desquels affleurent les têtes sensibles (13) des capteurs de température.

5. Détecteur selon les revendications 1 ou 2, caractérisé en ce que les moyens pour assurer un appui élastique de la plaquette sur la paroi extérieure de l'élément (14) sont constitués par un châssis porteur (3) équipé d'organes de liaison élastique (7), (7') pour la fixation de la plaquette.

6. Détecteur selon la revendication 1, caractérisé en ce que la pièce-support (2) est constituée par un jeu de cames (26) longitudinales disposées parallèlement les unes à côté des autres et incorporant chacune un capteur de température (11), en ce que les cames comportent une extrémité inférieure libre (27) en surface de laquelle affleure une tête de mesure (13) du capteur, l'autre extrémité (30) étant articulée sur un axe commun (31).

7. Détecteur selon les revendications 1 et 6, caractérisé en ce que les moyens pour assurer aux cames un appui élastique sur la paroi extérieure de l'élément (14) sont constitués par une articulation élastique (34) des extrémités supérieures des cames autour de leur axe commun.

8. Détecteur selon les revendications 6 ou 7, caractérisé en ce que les cames (26) sont de longueur différente.

9. Détecteur selon les revendications 6 ou 7, caractérisé en ce que les cames (26) ont des longueurs identiques et en ce qu'elles sont montées sur un axe support commun à paliers échelonnés.

10. Application du détecteur selon l'une des revendications 1 à 9, caractérisée en ce que la lingotière de coulée continue est équipée d'un inducteur de brassage (21) disposé extérieurement à la chemise (15) et en ce que le détecteur (1) est placé entre ledit inducteur et la chemise.

11. Application selon la revendication 10, caractérisée en ce que l'inducteur de brassage est relié à une alimentation électrique polyphasée par l'intermédiaire d'une boîte de connexion (22) étanche montée sur la lingotière et en ce que le détecteur (1) est en liaison électrique avec l'extérieur par l'intermédiaire de ladite boîte de connexion.

## Claims

1. A heat-sensitive detector (1) of the level of the material contained in a mould for the continuous casting of molten metals in which a cooling fluid circulates in a space (16) provided between a tubular inner member (14) defining the passage for the metal (18) being cast and a jacket (15) spacedly surrounding said member, said detector (1) comprising a plurality of temperature sensors having sensitive heads (13) distributed along the height of the member (14) and being characterized in that it comprises a supporting member (2), with the temperature sensors (11) mounted inside, having at least one small surface element (12) flush which the sensitive heads (13) of the sensors (11), in that the jacket (15) is pierced to enable the supporting member (2) to go through, in that fixation means (7), (7'), (8), (8'), (9), (9') are provided to ensure that the supporting member resiliently bears with said surface element (12) on the outer wall of said tubular member (14) and in that the surface element (12) has a geometrical form enabling it to fit with the outer wall of said member (14) where they bear on each another.

2. A detector according to claim 1, characterized in that the supporting member (2) is essentially made up of a plate (4) showing holes (10) which open on a small surface element (12) designed to resiliently bear on the outer wall of tubular member (14) and which hold the temperature sensors (11).

3. A detector according to claim 2, characterized in that the supporting plate (4) shows a chamber (25), (25'), at least at the upper end of said small bearing surface element (12).

4. A detector according to claim 2 or claim 3, characterized in that the small bearing surface (12) shows spaced notches (10) defining between one another studs the end of which flush with the sensitive heads (13) of the temperature sensors.

5. A detector according to claim 1 or claim 2, characterized in that the means for ensuring a resilient bearing of the plate on the outer wall of the member (14) are made of a supporting frame (3) equipped with resilient binding members (7), (7') for fixating the plate.

6. A detector according to claim 1, characterized in that the supporting member (2) is made of a set of longitudinal camps (26) disposed parallely on the side of one another, each of which comprises a temperature sensor (22), and in that the cams have a free lower end (27) on the surface of which flushes a measuring head (13) of the sensor, the other end (30) being pivoted on a common axle (31).

7. A detector according to claim 1 and claim 6, characterized in that the means for ensuring to the cams a resilient bearing on the outer wall of member (14) are provided by the fact that the upper ends of the cams are drawn back by a resilient joint (34) when pivoting around their common axle.

8. A detector according to claim 6 or claim 7, characterized by the camps (26) having various lengths.

9. A detector according to claim 6 or claim 7, characterized by the cams having identical lengths and being fitted on an common supporting axle having staggered bearings.

10. An application of the detector according to one of the claims 1 through 9, characterized in that the continuous casting mould is equipped with a stirring inductor (21) arranged on the outside of jacket (15) and in that the detector (1) is located between said inductor and said jacket.

11. An application according to claim 10, characterized in that the stirring inductor is connected to a polyphase electric supply unit through a watertight connection box (22) mounted on the continuous casting device and in that the detector (1) is electrically connected to the outside through said connection box.

## Patentansprüche

1. Wärmeempfindlicher Detektor (1) des Niveaus eines Materials in einer Stranggiesskokille für Metallschmelze, mit einem Kühlfluidkreis in einem Raum (16), der zwischen einem rohrförmigen inneren Element (14), welches einen Durchgang für das vergossene Metall (18) bildet, und einem Mantel (15) vorgesehen ist, welcher das Element mit Abstand umgibt, wobei der Detektor (1) eine Vielzahl von Temperaturfühlern aufweist, deren Fühlköpfe (13) über die Höhe des Elementes (14) verteilt sind, dadurch gekennzeichnet, dass er mit einem Tragteil (2) versehen ist, in welchem die Temperaturfühler (11) montiert sind und der zumindest ein Oberflächenelement (12) aufweist, mit welchem die Fühlköpfe (13) der Fühler (11) bündig abschliessen, dass der Mantel (15) für den Durchtritt des Tragteiles (2) durchbrochen ist, dass Mittel (7), (7'), (8), (8'), (9), (9') zum Befestigen des Detektors an der Aussenwand des Mantels (15) vorgesehen sind, um dem Tragteil über sein Oberflächenelement (12) eine elastische Anlage an der Aussenwand des Elementes (14) zu erteilen, und dass das Oberflächenelement (12) geometrisch so ausgebildet ist, dass es sich an der Anlagestelle der Aussenwand des Elementes (14) anpasst.

2. Detektor nach Anspruch 1, dadurch gekennzeichnet, dass der Tragteil (2) im wesentlichen durch eine Platte (4) gebildet ist, die Durchbrechungen (10) aufweist, welche auf einer kleinen, zur elastischen Anlage an der Aussenwand des Elementes (14) bestimmten Fläche (12) ausmünden und in welchen die Temperaturfühler (11) angeordnet sind.

3. Detektor nach Anspruch 2, dadurch gekennzeichnet, dass die Tragplatte (4) zumindest am oberen Ende der kleinen Anlagefläche (12) eine abgeschrägte Kante (25), (25') aufweist.

4. Detektor nach Anspruch 2 oder 3, dadurch gekennzeichnet, dass die kleine Anlagefläche (12) mit gegenseitigem Abstand angeordnete Aussparungen (10) aufweist, welche zwischeneinander Ansätze definieren, mit deren Ende die Fühlköpfe (13) der Temperaturfühler bündig abschliessen.

5. Detektor nach Anspruch 1 oder 2, dadurch gekennzeichnet, dass die Mittel zur Sicherung einer elastischen Anlage der Platte an der Aussenwand des Elementes (14) durch ein Traggestell (3) gebildet sind, das mit elastischen Verbindungsorganen (7), (7') zur Befestigung der Platte versehen ist.

6. Detektor nach Anspruch 1, dadurch gekennzeichnet, dass der Tragteil (2) durch eine Gruppe von langgestreckten Daumen (26) gebildet ist, die parallel nebeneinander angeordnet sind und je einen Temperaturfühler (11) enthalten, und dass die Daumen ein freies unteres Ende (27) aufweisen, mit dessen Flächen ein Messkopf (13) des Fühlers bündig abschliesst, wogegen das andere Daumenende (30) auf einer gemeinsamen Achse (31) angelenkt ist.

7. Detektor nach einem der Ansprüche 1 und 6, dadurch gekennzeichnet, dass die Mittel zur Sicherung einer elastischen Anlage der Daumen an der Aussenwand des Elementes (14) durch eine elastische Anlenkung (34) der oberen Daumenenden um ihre gemeinsame Achse gebildet sind.

8. Detektor nach Anspruch 6 oder 7, dadurch gekennzeichnet, dass die Daumen (26) unterschiedliche Länge haben.

9. Detektor nach Anspruch 6 oder 7, dadurch gekennzeichnet, dass die Daumen (26) gleiche Länge haben und dass sie auf einer gemeinsamen Tragachse mit versetzten Lagern montiert sind.

10. Anwendung des Detektors nach einem der Ansprüche 1 bis 9, dadurch gekennzeichnet, dass die Stranggiesskokille mit einem Rührinduktor (21) ausgestattet ist, der ausserhalb des Mantels (15) vorgesehen ist und dass der Detektor (1) zwischen dem Induktor und dem Mantel angeordnet ist.

11. Anwendung nach Anspruch 10, dadurch gekennzeichnet, dass der Rührinduktor an ein elektrisches Mehrphasennetz über eine dichte, auf der Kokille montierte Anschlussdose (22) angeschlossen ist und dass der Detektor (1) über die Anschlussdose elektrisch nach aussen geführt ist.

Fig_2

Fig_1

coupe AA

coupe BB

Fig_3

Fig _ 5

Fig _ 4